# DEMANDE DE BREVET EUROPEEN

(11) **EP 1 343 030 A1**
(43) Date de publication de la demande: **10.09.2003**
(21) Numéro de dépôt: 03290510.1
(22) Date de dépôt: 04.03.2003
(51) Int. Cl.: G02B 6/12, G02B 6/30

(54) **Dispositif optique comportant un adapteur de mode sur composant optique à bande interdite photonique**

(30) Priorité: 05.03.2002 FR 0202771
(71) Demandeur: ALCATEL, 75008 Paris (FR)
(72) Inventeur: Bouadma, Noureddine, 75013 Paris (FR); Ksas, Sarah, 84120 La Bastidonne (FR)
(74) Mandataire: Lamoureux, Bernard

(57) **Abrégé**

Dispositif optique comprenant un composant à Bande Interdite Photonique (BIP) composé d'un matériau massique incluant une distribution de trous régulièrement espacés, ledit composant à bande interdite photonique étant délimité par une première et seconde extrémités et comprenant un guide d'onde du type à Réflexion Totale Interne (TIR), caractérisé en ce que le composant à bande interdite photonique comporte un adaptateur de mode intégré sur la première et/ou la seconde extrémité dudit composant photonique, l'adaptateur de mode est constitué en outre par une distribution des trous du composant à bande interdite photonique (BIP) entraînant un élargissement adiabatique du guide d'onde à réflexion totale interne (TIR) sur ladite première et/ou seconde extrémité du composant.

## Description

La présente invention concerne le domaine des composants optiques à bande interdite photonique (BIP) couramment appelés cristaux photoniques. L'invention concerne plus spécifiquement le couplage d'un signal optique entre un guide d'onde à saut d'indice, dit classique dans la suite de la description, et un guide d'onde d'un cristal photonique.

La notion de cristal photonique est apparue récemment et le premier composant de ce type fut réalisé par Eli Yablonovitch en 1991. Un composant BIP est constitué d'un matériau massique diélectrique, par exemple un semi-conducteur III-V, incluant une distribution de motifs, dits « trous », régulièrement espacés. Les trous sont généralement de l'air mais peuvent être composés d'un autre matériau diélectrique, distinct du matériau massique, d'indice de réfraction inférieur à celui du matériau massique. Dans un composant BIP à trois dimensions, les motifs, ou trous, présentent généralement la forme de billes, et dans un composant BIP à deux dimensions, les motifs présentent généralement la forme de cylindres.

La disposition régulière des trous dans le matériau massique permet d'assimiler un tel composant à un cristal, baptisé cristal photonique. Une telle structure périodique entraîne la création d'une bande photonique encadrée par des bandes d'énergie interdites, de façon analogue à la structure électronique d'un cristal semi-conducteur.

Dans un composant BIP, la position de la bande photonique dans la bande fréquentielle est déterminée par l'espacement entre les trous, c'est à dire le pas, et la largeur de cette bande photonique est fixée par le taux de remplissage des trous dans le matériau massique (connu comme « air filing » en terminologie anglaise), c'est à dire dépend du diamètre desdits trous. Ainsi, il est possible de réaliser un composant optique BIP qui soit totalement réflecteur dans une bande spectrale donnée. Par exemple, un pas de 200 à 300 nm des trous crée une bande photonique dans le proche infrarouge.

Les composants BIP font l'objet de nombreuses applications et expérimentations pour la transmission, l'émission ou la détection de signaux optiques. Ils constituent des filtres quasiment parfaits et permettent d'atteindre d'excellentes performances en matière de propagation de signaux optiques, en particulier pour des guides d'onde courbes.

Il est en effet possible de créer un guide d'onde dans un composant BIP, en créant un défaut dans la structure du cristal photonique, pour réaliser un guide d'onde à réflexion totale interne, dit TIR pour Total Internal Reflexion en anglais. Un tel défaut est constitué par une absence de structure cristalline, c'est à dire par une absence de trous dans une zone donnée du cristal. Par exemple, un tel défaut peut être introduit par la suppression de toute une rangée de trous sur une profondeur déterminée du composant BIP.

Un guide d'onde TIR présente des propriétés optiques très avantageuses, en particulier pour le guidage d'un signal optique. En effet, les photons constituant le signal optique se propagent dans le défaut créé par l'absence de trous et restent parfaitement confinés par le matériau présentant les bandes interdites. Dans le cas d'un composant BIP à deux dimensions, le matériau à bande interdite confine le signal optique latéralement et le guide d'onde peut en outre être confiné verticalement par une structure dite classique, à saut d'indice.

Ainsi, selon le pas, le diamètre et la profondeur des trous du composant BIP, un guide TIR permet la propagation d'un signal optique quasiment sans pertes dans une bande de fréquence donnée.

Néanmoins, un problème se pose lorsqu'un tel composant BIP doit être combiné avec un composant optique dit classique. Dans un composant classique, le guide d'onde (une fibre ou un guide planaire) est caractérisé par une propagation évanescente du signal optique et matérialisé par une différence d'indice de réfraction entre le matériau constituant le coeur et le matériau constituant la gaine du guide. Pour une transmission monomode d'un signal optique, le coeur d'un guide d'onde classique présente un diamètre (dans le cas d'une fibre) ou une largeur (dans le cas d'un guide planaire) d'environ 1 à 5 µm. En revanche, dans un guide d'onde TIR monomode, l'étalement du mode peut être très inférieur. En effet, il est possible, pour un guide TIR, créé par une absence de trous, d'atteindre une largeur de seulement 300 à 500 nm.

Une telle différence de taille de mode, d'un facteur dix environ, entraîne nécessairement un important problème de couplage optique entre le guide d'onde classique et le guide d'onde à réflexion totale interne. Ainsi, les composants BIP présentent des propriétés intéressantes lorsqu'ils sont utilisés seuls ou entre eux, mais perdent leurs avantages lorsqu'ils doivent être combinés à des composants dits classiques.

En effet, les pertes introduites lors du couplage d'un guide d'onde à saut d'indice avec un guide d'onde TIR peuvent atteindre 70%, ce qui annule les propriétés avantageuses citées précédemment en référence aux guides d'onde TIR.

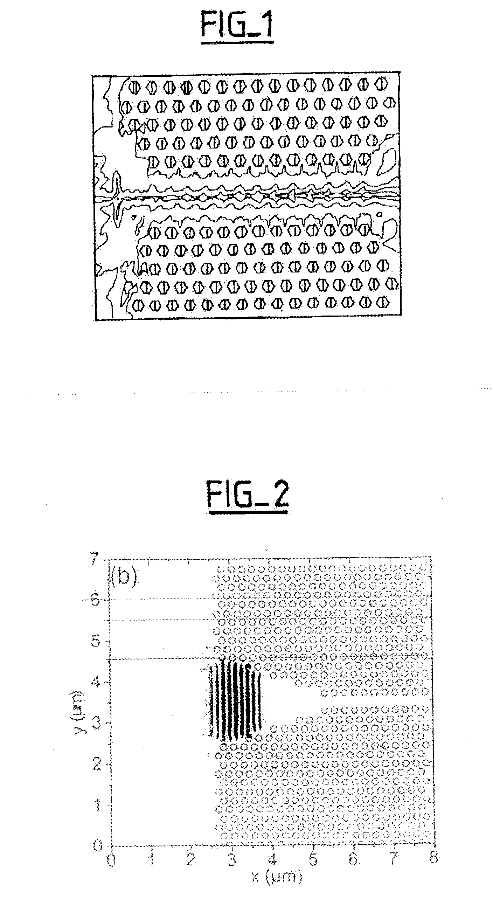

La figure 1 illustre à cet effet une simulation du couplage d'un signal optique à 1.55 µm entre un guide d'onde à saut d'indice avec un guide d'onde TIR. Les trous de la structure cristalline du composant photonique ont un pas constant de 0.45 µm et un diamètre constant de 0.15 µm. Le coefficient de transmission simulé est seulement de 30%.

Les problèmes de couplage optique entre composants dits classiques sont bien connus dans le domaine des transmissions optiques, spécifiquement dans le cas de transmissions de signaux monomodes.

Les problèmes de couplage sont essentiellement dus au fait que les tailles de modes du signal optique sont différentes d'un composant à un autre. Pour résoudre ce problème, il est connu d'utiliser des adaptateurs de modes qui consistent à modifier la taille du mode d'un signal optique se propageant dans un composant avant de le coupler dans un autre composant. Une des solutions retenues pour les composants optiques à guidage par saut d'indice est la création d'un cône (dit taper en terminologie anglaise). Le taper constitue une variation adiabatique de la largeur ou du diamètre du coeur du guide. Une telle variation adiabatique permet une modification sans perte de la taille du mode d'un signal monomode à coupler.

Néanmoins, les problèmes de couplages connus et traités jusqu'à présent concernaient des guides d'onde du même type (à guidage par saut d'indice) avec des différences de tailles de mode limitées.

Dans le cas d'un couplage entre un guide d'onde à saut d'indice avec un guide d'onde TIR, la différence de taille de mode peut atteindre un facteur dix, comme mentionné précédemment. Or, il n'est pas possible de réduire de façon adiabatique et par un tel facteur la taille du coeur d'un guide d'onde à saut d'indice sans allonger considérablement la taille du composant optique, cela pour des raisons de limites technologiques actuelles.

Une solution au problème du couplage entre un guide d'onde à saut d'indice et un guide d'onde TIR est décrite dans la demande de brevet japonaise JP 2001/004869 et consiste à élargir le guide TIR en ôtant plusieurs rangées de trous dans le cristal photonique. Néanmoins, cette solution présente un inconvénient sérieux si l'on veut maintenir une propagation monomode du signal optique dans le guide TIR.

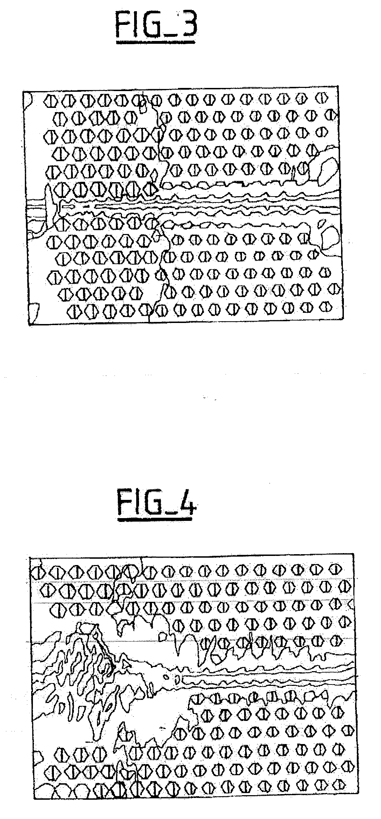

Une autre solution connue est décrite dans la publication « Photonic crystal tapers for ultracompact mode conversion » de Thomas D. Happ et Al ; Optics Letters, Vol.26, No.14 du 15 juillet 2001. La solution proposée dans cette publication est illustrée figure 2 et consiste à réaliser un élargissement adiabatique du guide d'onde (TIR) sur l'extrémité de couplage du composant photonique. On réalise ainsi un taper dans le guide TIR du composant photonique. Cette solution améliore considérablement le coefficient de transmission. Cette solution présente cependant une certaine complexité quant à la maîtrise de la disposition des trous dans le composant photonique pour réaliser un taper vraiment adiabatique.

Ainsi, l'objet de la présente invention est de proposer un dispositif optique comportant un adaptateur de mode qui permette d'atteindre un coefficient de couplage amélioré entre un guide d'onde à saut d'indice d'un composant dit classique et un guide d'onde à réflexion totale interne d'un composant à bande interdite photonique.

A cet effet, l'invention propose d'intégrer l'adapteur de mode dans le composant à bande interdite photonique.

L'invention a également pour but de proposer un adaptateur dont la réalisation est simplifiée.

Plus particulièrement, la présente invention se rapporte à un dispositif optique comprenant un composant à Bande Interdite Photonique (BIP) composé d'un matériau massique incluant une distribution de trous régulièrement espacés, ledit composant à bande interdite photonique étant délimité par une première et une seconde extrémités et comprenant un guide d'onde du type à Réflexion Totale Interne (TIR), caractérisé en ce que le composant à bande interdite photonique comporte un adaptateur de mode intégré sur la première et/ou la seconde extrémité dudit composant photonique, ledit adaptateur étant constitué par une diminution du diamètre des trous depuis ladite selon la direction du guide d'onde (TIR).

La disposition des trous reste ainsi constante par rapport à la solution connue illustrée sur la figure 2. Comme indiqué précédemment, le taux de remplissage (« air filling ») influe sur la largeur de la bande photonique et donc directement sur le coefficient de transmission du guide d'onde TIR. En diminuant le diamètre des trous progressivement, on peut ainsi adapter le coefficient de transmission et réaliser un adaptateur de mode avec des pertes optiques minimisées.

Selon un mode de réalisation, l'adaptateur de mode peut joindre les avantages d'une diminution des trous selon l'invention et la réalisation d'un taper selon la solution connue présentée précédemment. Ainsi, l'adaptateur serait constitué en outre par une distribution des trous du composant à bande interdite photonique (BIP) entraînant un élargissement adiabatique du guide d'onde (TIR) sur ladite première et/ou la seconde extrémité.

L'invention concerne également un système optique comprenant un composant optique comportant un guide d'onde optique à saut d'indice couplé avec un composant optique à bande interdite photonique comportant un guide d'onde du type à réflexion totale interne (TIR), caractérisé en ce que le couplage entre lesdits guides d'onde est assuré par un dispositif optique comprenant un composant à Bande Interdite Photonique (BIP) composé d'un matériau massique incluant une distribution de trous régulièrement espacés, ledit composant à bande interdite photonique étant délimité par une première et une seconde extrémités et comprenant un guide d'onde du type à Réflexion Totale Interne (TIR), le composant à bande interdite photonique (BIP) comportant en outre un adaptateur de mode intégré sur la première et/ou la seconde extrémité dudit composant photonique, ledit adaptateur étant constitué par une diminution du diamètre des trous depuis ladite selon la direction du guide d'onde (TIR).

Les particularités et avantages de la présente invention apparaîtront plus clairement à la lecture de la description qui suit, donnée à titre d'exemple illustratif et non limitatif, et faite en référence aux figures annexées dans lesquelles :
- la figure 1, déjà décrite, illustre une simulation de couplage dans un composant photonique comprenant un guide d'onde TIR ;
- la figure 2, déjà décrite, est un schéma d'un adaptateur de mode pour un composant photonique selon l'art antérieur ;
- la figure 3 illustre une simulation de couplage dans un composant photonique comprenant un adaptateur selon un premier mode de réalisation de l'invention ;
- la figure 4 illustre une simulation de couplage dans un composant photonique comprenant un adaptateur selon un deuxième mode de réalisation de l'invention.

L'invention propose de réaliser un dispositif optique adaptateur de mode permettant d'effectuer un couplage amélioré entre un guide d'onde optique classique à saut d'indice et un guide d'onde du type à réflexion totale interne (TIR). Le guide d'onde TIR est créé dans un composant à bande interdite photonique (BIP), tel que précédemment décrit, qui est délimité par une première et une seconde extrémité.

La distribution des trous dans le composant photonique peut être une matrice de lignes avec un maillage régulier des trous dans le matériau massique, mais peut également être constituée d'un maillage plus complexe.

De préférence, le pas de la distribution des trous dans le composant photonique est constant pour maintenir la position de la bande interdite sur une plage fréquentielle fixée.

Selon l'invention, l'adaptateur de mode est intégré au composant à bande interdite photonique, soit sur la première extrémité, pour un couplage optique en entrée du guide TIR, soit sur la seconde extrémité, pour un couplage optique en sortie du guide TIR. Le dispositif selon l'invention est destiné à être intégré dans un système optique plus complexe incluant un guide optique d'entrée et/ou un guide optique de sortie et au moins un composant à bande interdite photonique apte à traiter, transmettre, détecter ou émettre un signal optique. Le dispositif selon l'invention est donc destiner à permettre un couplage amélioré entre les guides d'entrée/sorties de conception classique à saut d'indice et un composant à bande interdite photonique dans un système optique.

Selon l'invention, le dispositif optique comporte un composant photonique dont le diamètre des trous décroît depuis la première extrémité vers la seconde extrémité du composant. On peut envisager la même réalisation avec une décroissance du diamètre des trous depuis la seconde extrémité vers la première extrémité. La décroissance du diamètre des trous n'est pas forcément maintenue depuis une extrémité jusqu'à l'autre. Le diamètre des trous peut redevenir constant après une distance permettant d'effectuer l'adaptation adiabatique du mode de propagation du signal optique. Ainsi, on peut envisager d'avoir une décroissance du diamètre des trous depuis la première extrémité du composant vers la seconde pour un couplage en entrée, suivie d'une série de trous de diamètre constant et une augmentation dudit diamètre jusqu'à la seconde extrémité pour un couplage en sortie.

La simulation de la figure 3 illustre à cette effet le couplage d'un signal optique à 1.55 µm entre un guide d'onde à saut d'indice avec un guide d'onde TIR comportant un adaptateur selon l'invention. Les trous de la structure cristalline du composant photonique ont un pas constant de 0.45 µm mais le diamètre décroît depuis la première extrémité (à gauche) vers la seconde extrémité (à droite), en passant de 0.19 µm à 0.18 µm et à 0.16 µm puis reste constant à 0.15 µm jusqu'à la seconde extrémité. Le coefficient de transmission simulé est alors de 50%.

Selon un autre mode de réalisation de l'invention, il est particulièrement avantageux de combiner les effets de l'invention avec un taper, c'est à dire de réaliser un dispositif optique comportant un composant photonique dont le diamètre des trous varie d'une extrémité à l'autre du composant photonique et dont la distribution des trous est telle qu'un taper est constitué dans le guide TIR à l'une ou l'autre des extrémités du composant photonique.

La simulation de la figure 4 illustre le couplage d'un signal optique à 1.55 µm entre un guide d'onde à saut d'indice avec un guide d'onde TIR comportant un tel adaptateur. Les trous de la structure cristalline du composant photonique ont un pas constant de 0.45 µm mais le diamètre décroît depuis la première extrémité (à gauche) vers la seconde extrémité (à droite) et le taper s'étend sur environ sept colonnes de trous. Le coefficient de transmission simulé est alors de 90%.

Selon les applications, ces différents modes de réalisations décrits peuvent être combinés sur un même composant pour réaliser un adaptateur de mode en entrée et/ou en sortie d'un composant de type cristal photonique.

L'invention trouve ainsi une application avantageuse dans des systèmes optiques comprenant des guides d'onde optiques classiques à saut d'indice, planaires ou à fibre, à coupler avec des composants à bande interdite photonique au moyen d'un dispositif optique selon la présente invention.

## Revendications

1. Dispositif optique comprenant un composant à Bande Interdite Photonique (BIP) composé d'un matériau massique incluant une distribution de trous régulièrement espacés, ledit composant à bande interdite photonique étant délimité par une première et une seconde extrémités et comprenant un guide d'onde du type à Réflexion Totale Interne (TIR), **caractérisé en ce que** le composant à bande interdite photonique comporte un adaptateur de mode intégré sur la première et/ou la seconde extrémité dudit composant photonique, ledit adaptateur étant constitué par une diminution du diamètre des trous depuis ladite selon la direction du guide d'onde (TIR).

2. Dispositif optique selon la revendication 1, **caractérisé en ce que** l'adaptateur de mode est constitué en outre par une distribution des trous du composant à bande interdite photonique (BIP) entraînant un élargissement adiabatique du guide d'onde à réflexion totale interne (TIR) sur ladite première et/ou seconde extrémité du composant.

3. Dispositif optique selon l'une des revendications précédentes, **caractérisé en ce que** la distribution des trous dans le composant à bande interdite photonique est une matrice de lignes.

4. Dispositif optique selon l'une des revendications précédentes, **caractérisé en ce que** le pas de la distribution des trous dans le composant à bande interdite photonique est constant.

5. Système optique comprenant un composant optique comportant un guide d'onde optique à saut d'indice couplé avec un composant optique à bande interdite photonique comportant un guide d'onde du type à réflexion totale interne (TIR), **caractérisé en ce que** le couplage entre lesdits guides d'onde est assuré par un dispositif optique comprenant un composant à Bande Interdite Photonique (BIP) composé d'un matériau massique incluant une distribution de trous régulièrement espacés, ledit composant à bande interdite photonique étant délimité par une première et une seconde extrémités et comprenant un guide d'onde du type à Réflexion Totale Interne (TIR), le composant à bande interdite photonique (BIP) comportant en outre un adaptateur de mode intégré sur la première et/ou la seconde extrémité dudit composant photonique, ledit adaptateur étant constitué par une diminution du diamètre des trous depuis ladite selon la direction du guide d'onde (TIR).

6. Système selon la revendication 5, **caractérisé en ce que** l'adaptateur de mode est constitué en outre par une distribution des trous du composant à bande interdite photonique (BIP) entraînant un élargissement adiabatique du guide d'onde à réflexion totale interne (TIR) sur ladite première et/ou seconde extrémité du composant.
